# EUROPEAN PATENT APPLICATION

(11) **EP 1 343 121 A2**
(43) Date of publication of application: **10.09.2003**
(21) Application number: 03251275.8
(22) Date of filing: 04.03.2003
(51) Int. Cl.: G07C 9/00

(54) **Computer telephony system to access secure resources**

(30) Priority: 07.03.2002 US 92973
(71) Applicant: MATSUSHITA ELECTRIC INDUSTRIAL CO., LTD., Kadoma-shi, Osaka 571-8501 (JP)
(72) Inventor: Junqua, Jean-Laude, Santa Barbara, California 93110 (US)
(74) Representative: Atkinson, Ralph

(57) **Abstract**

User interaction with a secure resource is controlled or mediated by the security server that includes a telephony interface by which the server is either coupled to the telephone system or provides messages to the telephone system directly or through an intermediate component. A biometric data store stores biometric data, such as speech data or visual recognition data. If desired the biometric data may also be stored in association with the extension identifiers of the telephone system. A biometric verification/.identification system accesses this data store and evaluates provided user biometric data vis-a-vis the stored biometric data to determine if the user may control or interact with the secure resource. If interaction is permitted, the security server sends control signals to the secure resource. The telephone system provides an interface through which the user trains the system to store the biometric verification/.identification data of that user.

## Description

### FIELD OF THE INVENTION

The present invention relates to use of biometric identification/verification techniques, such as speaker identification and/or verification techniques to interact with secure resources. More particularly the invention relates to a biometric identification/verification system and method implemented using computer telephony system that integrates with a telephone system such as a private branch exchange (PBX) system.

### BACKGROUND OF THE INVENTION

Various verification and identification techniques have been proposed for controlling access to secure resources. Particularly promising in this regard are the numerous biometric verification and identification techniques. These techniques all rely on some form of biometric data supplied by a user. Biometric data is particularly desirable in verification and identification applications, because this data is comparatively difficult for an impostor to generate. Examples of biometric data include, fingerprint data, retinal scan data, face identification data, speech or voice data and speaker identification/verification data. Other types of biometric data useful in verification/identification procedures are also contemplated.

The terms verification and identification are sometimes used interchangeably; however they refer to somewhat different aspects of the overall security problem. Identification involves determining who an unidentified person is; verification involves determining whether a person is who he or she claims to be. As will be appreciated by those skilled in the art, the present invention may be used with all forms of biometric data, involving both techniques that effect identification and that effect verification. Thus, where applicable, the concatenated term verification/identification has been used to denote systems that employ or perform (a) verification, (b) identification, or (c) both verification and identification.

Heretofore it has been difficult to integrate biometric security systems into existing infrastructure. While biometric security systems can be designed into new products, it is not always easy to add biometric security functionality in existing products. The present invention addresses this issue by providing biometric security functionality through a security server that may be coupled to an existing telephone system, such as a PBX system or other communication switching or routing system. Alternatively, the security server may be coupled to another system, such as a security system, that is, in turn coupled to an existing telephone system. In a presently preferred embodiment, the security server is plugged into an extension of the telephone system. While any biometric verification/identification system may be implemented, a particularly useful one extracts biometric information from speech. This speech may be conveniently provided, for example, through the handset or speakerphone of a device attached as an extension of the telephone system.

The system of the invention may be used in a variety of applications where interaction with a secure resource is desired. For puposes of illustrating the principals of the invention, a secure resource will be described here in the form of an electrically controlled lock on a door. This embodiment is, of course, quite useful in itself, as it can be used to protect all variety of different areas, buildings, rooms, and safety deposit boxes. However, the invention is not limited to control of electric locks. Rather, it may be used to protect or control interaction with a wide range of secure resources, including computer resources, data resources, communication resources, financial resources and the like. For example, a selected group of employees may be authorized to place long distance calls through a single long distance account number. Alternatively, the selected group of employees may be authorized to use a charge card. According, it will be understood that the descriptions provided here that employ an electronic lock are intended to symbolize any secure resource, not just electronic locks.

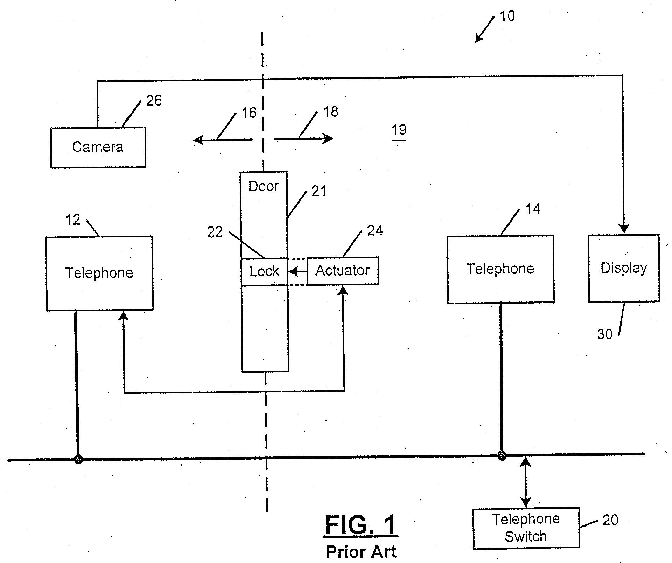

As an introduction to the problem of providing control over how a user may interact with a secure resource, consider FIG 1. FIG 1 illustrates an exemplary door and lock configuration as might be used in an apartment complex or large office complex to provide some control over access to the building or complex.

Referring now to FIG. 1, a door access system 10 according to the prior art typically includes first and second telephones 12 and 14 that are located outside 16 and inside 18 of a secured area 19. The first and second telephones 12 and 14 are connected to a local telephone switch 20. The door access system 10 may also use an intercom or other similar communication system instead of the telephones 12 and 14 and the telephone switch 20.

A door 21 restricts access to the secured area 19 and includes a lock 22 that can be opened by authorized persons from the outside using a key, an identification card, a password or other form of security. For an unauthorized person to gain access, someone inside must physically open the door 21 or trigger an actuator 24. The actuator 24 can be a relay that releases the lock 22 to allow the door 21 to be opened by the outside person. In addition, the door access system 10 may include a camera 26 that provides a video signal of the area outside of the door 20. The camera 26 may be connected by a cable or closed-circuit television system to a display 30 such as a television. A person inside of the secured area 19 may view the person outside of the secured area 19 on the display before granting access.

In use, a person desiring access to the building uses the outside communication system 12 to call a person inside of the secured area 19. The outside person dials an extension number of the inside person. A directory of names and numbers may be provided by the door access system 10. The inside person receives the call using the telephone 14. The inside person may grant the outside person access to the building by pressing a particular key on a keypad of the telephone 14.

For example, the inside person may press the number 9 on the keypad of the telephone to trigger the actuator 24, which releases the lock 22. In this example, the telephone 12 is a special type of telephone that communicates with the actuator 24. The special telephone 12 triggers the actuator 24 when the inside person presses the special key on the keypad of the telephone 14. The inside person may optionally view the outside person using the display 30 before granting access.

To gain access, these door access systems 10 require the inside person to be present and to answer the call from the outside person. Both of these requirements can be burdensome at times. For example, a person or business may receive packages from Federal Express or UPS on a daily basis. Other visitors such as food delivery personnel may also regularly require entry into the building, for example to provide lunch deliveries. Requiring the inside person to be present and able to receive the call from the outside person may pose a problem. Furthermore, regularly receiving calls from people requesting entry may unreasonably interfere with other tasks that are assigned to the inside person.

### SUMMARY OF THE INVENTION

An apparatus in accordance with the invention employs a security server having a telephony interface for coupling to a telephone system. The server is adapted to provide control signals to a secure resource through the telephone system. The system includes a call extension biometric data store that contains biometric data in association with at least one of the extensions of the telephone system. Thus, for example the data store could store biometric data corresponding to a delivery person who will be accessing a particular telephone extension in order to gain access to the reception lobby or mailroom of an office building.

The system further includes a biometric data input system coupled to the security server. The input system is operable to obtain user biometric data from a user operating one of the telephone extensions. For example, the input system may include voice input from which speech data is obtained from the user wishing to interact with the secure resource.

The system further includes a biometric verification/identification system that is configured to access the data store and to evaluate the user's biometric data vis-à-vis the stored biometric data, and to provide instructions to the security server. In this way the system provides control signals for interacting with the secure resource.

While many different biometric techniques may be used, a particularly useful embodiment uses speech data obtained from the user. Such a system may be configured to provide a first confidence level by performing text-independent analysis of the user's provided speech. Further capability may be added by implementing a second confidence level, by performing text-dependent analysis of the user's provided speech. If desired, speaker verification/identification processes may be performed upon the user's provided speech. In this regard, Gaussian mixture models or eigenvoice models may be constructed from training data provided by the user. These models are then stored in the biometric data store for later use during the verification/identification process.

The system may interpret and react to the several difference confidence levels in a variety of different ways. Based on a comparison of the stored biometric data with the newly obtained biometric data, interaction with the secure resource may be permitted if a first confidence level exceeds a first threshold. In such case the security server grants the user access to the secure resource. If the first confidence level does not exceed the first threshold, the security server may prompt the speaker, using synthesized speech for example, for a predetermined utterance, such as a password or pass phrase (consisting of one or more keywords, for example). The system would then generates a second confidence level by performing text-dependent analysis of the predetermined utterance of the speaker and compares the second confidence level to a second threshold.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

FIG. 1 illustrates a door access system according to the prior art;

FIG 2 illustrates a door access system according to the present invention;

FIG. 3 illustrates the security server of FIG. 2 in further detail;

FIG. 4 is a flowchart illustrating exemplary steps for granting access to a building or other resource using speech recognition according to the present invention;

FIG. 5 is a flow diagram illustrating the process by which either speaker identification or speaker verification may be performed using the eigenspace developed during training.

### DETAILED DESCRIPTION OF THE PREFERRED EMBODIMENTS

The following description of the preferred embodiment(s) is merely exemplary in nature and is in no way intended to limit the invention, its application, or uses. In this regard, as noted previously, although a door access system has been illustrated here, the invention is not limited to door access applications. Rather, the invention may be used in a variety of applications where biometric verification/identification is employed to control or mediate interaction with a secure resource that is accessible through a telephone system.

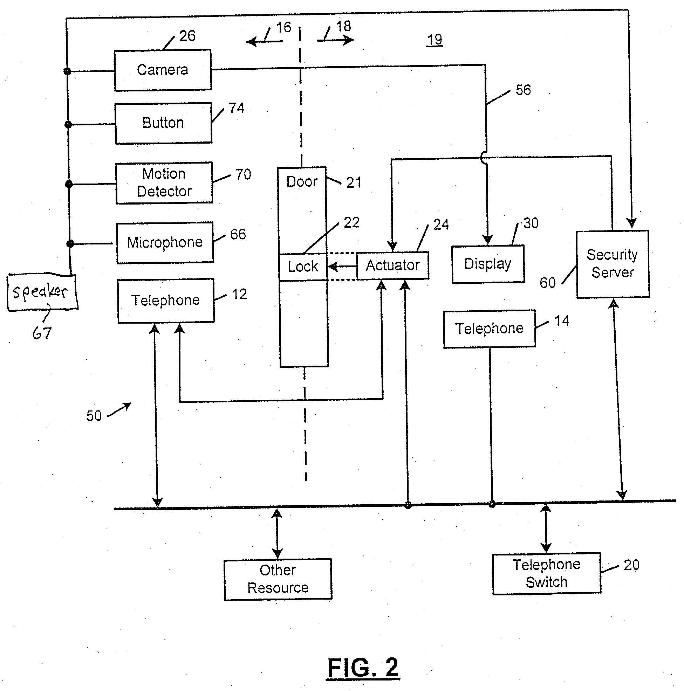

Referring now to FIG. 2, an exemplary door access system 50 according to the present invention is preferably integrated with the door access system 10 that is illustrated in FIG. 1. For purposes of clarity, reference numerals from FIG. 1 are used in FIG. 2 to identify similar elements. The improved door access system 50 includes first and second telephones 12 and 14. The first telephone 12 is located outside 16 of the secured area 19. The second telephone 14 is preferably located inside of the secured area 19. The second telephone 14 may be located outside of the secured area 19, such as in a remote security office. The first and second telephones 12 and 14 are connected to the telephone switch 20.

The door 21 includes the lock 22 that can be opened using the actuator 24. In addition, the door access system 50 may optionally include the camera 26 that provides the video signal of the area around the outside of the door 21. The camera 26 is connected by the cable system or the closed-circuit television system (generally identified at 56) to the display 30. If provided, the display 30 is preferably located adjacent to or within viewing distance of the second phone 14.

The door access system 50 additionally includes a security server 60 that communicates with the telephone switch 20 as an extension of the telephone system. The security server 60 can provide control signals to the actuator 24 in various different ways. For example, the security server 60 can be connected to the actuator 24 through the telephone switch 20, directly connected to the actuator 24, or connected through one or more additional devices (such as the telephone 12) to the actuator 24. The security server 60 implements a set of authorization rules 95 for granting or denying the speaker access to the secured area 19 based on the provided entry data 96, which may include the biometric data obtained from the user. The set of rules may also be dependent upon the day of the week, the time of the day, and/or the particular secured area that is being accessed.

The door access system 50 further includes a microphone 66 that generates audio signals near the outside of the door 21. A speaker 67 may also be provided for providing voice prompts and other verbal information to the user. The microphone 66 communicates with the security server 60. Of course, if desired the microphone within the speaker phone or handset of a telephone device may be used to communicate with the security server. A motion detector 70 senses movement outside 16 of the secured area 19 near the door 21. A motion signal is generated when motion is detected near the door 21. The motion signal is used by the security server 60 to enable the microphone 66 and/or to begin applying the set of authorization rules. A button 74 may also be used to enable the microphone 66. For a hands-free embodiment, the button 74 may be dispensed with, in favor of a speech enabled solution. For example, the speech channel through which the user speaks may be left open (always listening) and wordspotting technology or other beginning of speech detection technology may be used to detect that a user desires to interact with the secure resource.

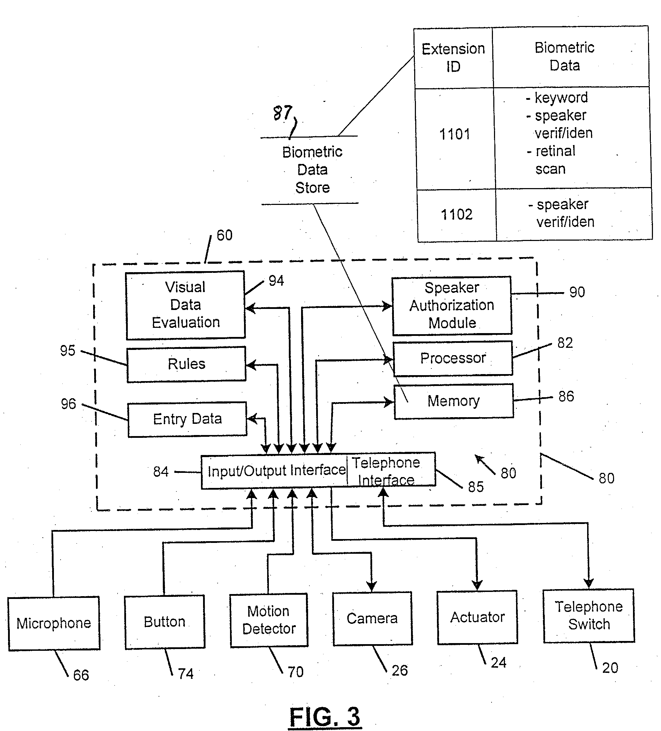

Referring now to FIG. 3, the security server 60 is illustrated in further detail. The security server 60 may be implemented using a computer 80 with a processor 82, an input/output interface 84 and memory 86 such as read only memory, random access memory, flash memory and/or other electronic storage.

Notably the security server includes a telephony interface 85 that allows the security server in one embodiment to be connected to an extension of the telephone system. In another embodiment, the security server is connected to an auxiliary device, such as a security system or burglar alarm system, which is, in turn, coupled to the telephone system. The security server is configured so that, in one embodiment, it can access information from the telephone switch 20 to determine the extension number, or other extension identifying information, that the user is operating during his or her attempt to interact with the secure resource (in this case lock 22). This extension information is used to access a record in the biometric data store 87 occupying a portion of memory 86.

Depending on the configuration desired, the security system can communicate with the secure resource either (a) directly or (b) through the telephone system, or (c) indirectly via a network system other than the telephone system, or (d) combinations of any of the preceding. For example, the security server may include a communication interface card (e.g. RS-232, Ethernet, wireless communication, etc.) that sends control instructions to the secure resource directly, or through computer network systems other than the telephone system. An RS-232 serial connection might be used, for example, to control the secure resource directly. The Ethernet or wireless communication links might be used, for example, to control the secure resource by communicating with other network system, such as local area network systems, wide area network systems, internet-based systems and wireless systems.

One important aspect of the security server is the flexibility that it provides. It is well adapted to integrate into existing system. Thus, users can continue to interact with secure resources using existing infrastructure. The security server adds additional interactive functionality to the existing infrastructure. For example, in an existing infrastructure a perimeter protection system (such as security system or burglar alarm system) might operate using keycards issued to all authorized occupants of a building. That system might also include a keypad access mechanism to allow authorized occupants to enter the building even if they do not have their keycard handy. The security server of the invention may be added to such system to provide additional access functionality. The invention could provide, for example, a voice-activated entry capability that would allow the authorized occupant to enter the building in "hands-free" mode by speaking the appropriate password at the entry point, for example.

Aside from providing additional resource interaction capability, the system of the invention benefits by its integration with the telephone system as a means of training the security server to recognize new authorized users. In this embodiment, the telephone system serves as a component of convenient data acquisition system that communicates prompts to the user. The prompts are designed to elicit input speech from the user that is then used to develop the recognition models and/or identification/verification models for that speaker. Once developed, these models are then used by the security server in performing its speech processing functions when that user attempts to interact with the secure resource.

Information collected about the users of the system (such as speech data, other biometric data, password data, telephone extension data and the like) is stored in a suitable data store. As illustrated, the data store may be configured to store associations among various biometric data (e.g., keyword data, speaker verification/identification data, retinal scan data, and the like) and the extension identifier numbers of the telephone system. FIG 3 shows one possible implementation in which telephone extension data is associated with different types of biometric data. For exemplary purposes in FIG 3, telephone extension 1101 has three types of biometric data associated with it: keyword data, speaker verification/identification data, retinal scan data. Extension 1102 has only speaker verification/identification data associated with it. Of course, many different data arrangements and permutations are possible. The biometric data associated with each extension can be data associated with multiple users, or with a single user. Thus in FIG 3, the biometric data associated with extension 1101, for example, may include data for several different users. If desired the data tables can contain pointers or references to other tables where the actual biometric data is stored.

In an embodiment that uses the association of biometric data and telephone extension data, the system employs a biometric verification/identification system that accesses data store 87 to retrieve stored biometric data associated with a given extension (the one being operated by the user). It then evaluates the user's provided biometric data vis-à-vis the stored biometric data to determine if the user may be permitted to interact with the secure resource. If stored biometric data for multiple users is stored in the database, the system can search all of this data to determine if any one of the users may be permitted to interact with the secure resource. In the embodiment of FIG 3, the biometric verification/identification system is implemented as several modules that may be operated or instantiated by processor 82. Other systems may not require association between the biometric data and the telephone extension. Thus this lookup aspect of the data store may be optional in some system configurations.

A speaker authorization module 90 employs text-dependent and/or text-independent recognition and generates confidence levels. Initially, the module employs text-independent recognition and generates a first confidence level. If the first confidence level is greater than a first threshold, the speaker is granted access to the secured area 19 or other resource. If the first confidence level is less than the first threshold, the speaker authorization module 90 employs text-dependent recognition and generates a second confidence level. If the second confidence level is greater than a second threshold, the speaker is granted access to the secured area 19 or other resource. If the second confidence level is less than the second threshold, the speaker is denied access.

The security server 60 may optionally include a visual data evaluation module 94 for providing an additional basis, such as face recognition, fingerprint analysis or retinal scan, for granting or denying access to the secured area 19 or other resource. Images captured by the camera 26 may provide an input image of the person, for example. The input image is compared with images of people who have been granted access.

The output of the visual data evaluation module 94 may be used to modify, increase, and/or decrease the calculation of the first and second confidence levels developed by the speaker authorization module. Alternately, the module 94 may provide a third confidence level that may be used to grant or deny access to the secured area 19 or other resources. In other words, access can be granted if either the text-independent verification exceeds the first threshold, the text-dependent verification exceeds the second threshold and/or a third confidence level generated by module 94 exceeds a third threshold (and any combination thereof). Alternately, if the speaker passes the text-independent verification but fails the face recognition verification, the speaker must still pass the text-dependent verification. Still other pass/fail combinations may be employed.

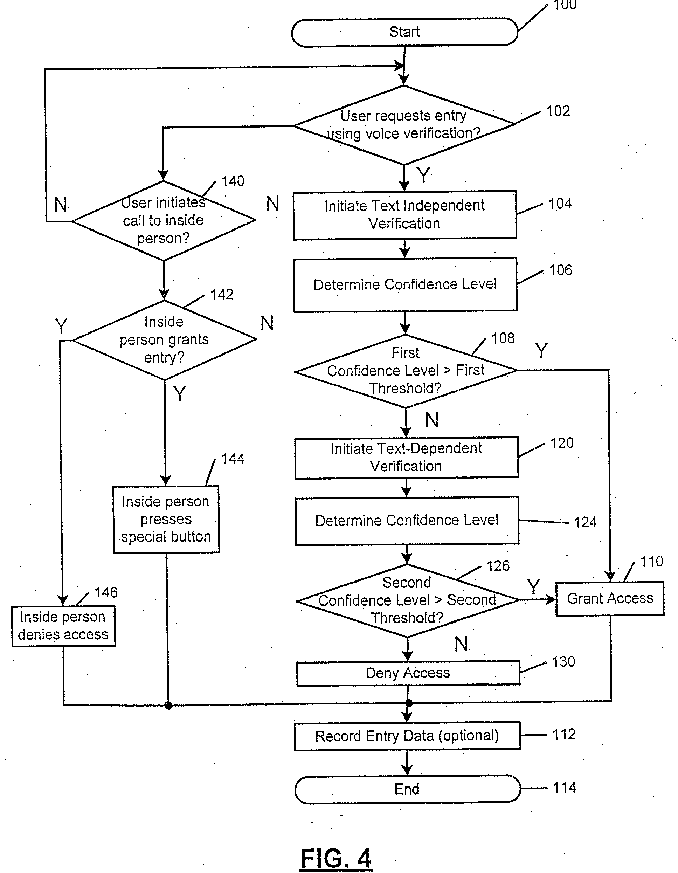

Referring now to FIG. 4, exemplary verification steps that are performed by the door access system 50 are shown. Control begins with step 100. In step 102, an initial determination is made as to whether the user desires to interact with the secure resource in a manual way, or in an automated way using speech. This initial determination can be made by any of the components within the system, including but not limited to the security server 60. In the door access system of FIG 4, the system thus determines whether the outside person is requesting entry to the secured area 19 or other resource using speaker identification and/or speaker verification. This step can be initiated when the motion detector 70 generates the motion detection signal, when the button 74 is pressed, and/or when an audio signal of the microphone 66 exceeds a threshold. Noise cancellation techniques may be employed to reduce spurious signals. Use of legacy infrastructure, such as keycard entry devices or keypad entry devices are interpreted by the system as requests to use a manual mode of interaction. Manual mode interaction does not require use of the security server, as the legacy infrastructure may be used instead. Use of the speech channel (e.g., by speaking into microphone 66 or into a telephone device) is interpreted as a request to use the automated speech-enabled functionality provided by the security server.

If the speaker requests entry using speaker identification and/or verification, the security server 60 initiates a text-independent verification in step 102. Text-independent verification verifies the identity of the speaker without the use of pre-selected words or phrases as will be described more fully below. In step 106, the security server 60 calculates a first confidence level based upon the text-independent verification. The first confidence level is a measurement of the certainty that the speaker is one of a plurality of persons previously authorized to enter.

In step 108, the security server 60 compares the first confidence level to a first threshold. If the first confidence level exceeds the first threshold, the speaker is granted access to the building or other resource in step 110. Control continues from step 110 to step 112 where the security server 60 records entry transaction data fields such as the time of the request for entry, the identification of the user, a photo of the user, audio of the user, and/or whether entry was granted or denied. Control ends in step 114.

If the first confidence level is less than the first threshold, the security server 60 initiates a text-dependent verification in step 120. The text-dependent verification queries the speaker for a password, a password phrase, or other keywords that are expected by the security server 60. Based upon the response of the speaker, the security server 60 calculates a second confidence level in step 124.

In step 126, the security server 60 compares the second confidence level to a second threshold. If the second confidence level is greater than the second threshold, control continues with step 110 and access is granted to the secured area or other resource. Otherwise, control continues with step 130 where the security server 60 denies the speaker access to the secured area 19 or other resource. Control continues from step 130 to step 112 where entry transaction data is recorded.

The steps 140, 142, 144 and 146 are performed when the speaker calls the inside person as previously described above. In a manual mode of interaction the security server does not need to be involved at all. It can, however, be optionally involved to provide additional speech-related capabilities. For example, the security server 60 can optionally be involved when the speaker initiates a call to the inside person. For example, the security server 60 can enable the camera 26, the microphone 66 or other devices. The security server 60 can also record the entry transaction data.

The set of authorization rules that are implemented by the security server 60 may involve speaker authorization profiles. For example, a person may be authorized to enter between 8 a.m. and 5 p.m. Monday through Friday. Another person may be authorized to enter part of the building on Tuesdays between 10 a.m. and 12 p.m. Each speaker profile may vary depending upon the day of the week and/or the time of day that the particular speaker requests access to the building. In addition, the speaker may also be granted access to different parts of the building depending upon the time, day or date.

### Confidence Level Generation Using Speech Data

Confidence level may be assessed in a variety of ways. For purposes of discussion here, speech processing may be classified as text dependent (TD) processing and text independent (Tl) processing. The principles of the invention can be exploited using either TD, Tl or both. Text dependent (TD) processing involves some a priori knowledge by the system of what speech the user is expected to provide at runtime. The user may be required to say a predetermined password or pass phrase that is known to the system in advance. Text independent (Tl) processing requires no special knowledge of a predetermined password or pass phrase. If desired, both text dependent and text independent techniques may be employed in the same embodiment. The system would test the user's utterance not only to extract the speaker voice characteristics uttering a specific word or phrase, but also to assess the speaker voice characteristics uttering any word or phrase.

To generate a confidence level in a system that employs text dependent (TD) processing, the confidence measure associated with a speech recognizer may be used. Most speech recognizers analyze an input utterance to assess the likelihood that the input utterance matches a word or phrase stored in the recognizer's lexicon or dictionary. If the recognizer has been trained by Mary to recognize the phrase "open door please," then when Mary utters that phrase the recognizer will return a recognition match with a comparatively high confidence score. If Bob utters the same phrase, "open door please," the recognizer may (or may not) return a recognition match. If it does return a match corresponding to the uttered phrase, "open door please," the confidence score is likely to be much lower than when Mary (who trained the system) uttered the phrase. Thus, the recognizer's confidence measure or confidence score may serve as a confidence level measure for speaker verification/identification. Mary's speech would produce a score above a predetermined threshold; Mary would be verified or identified by the system as authorized. Bob's speech would produce a score below a predetermined threshold; Bob would not be verified or identified by the system as authorized (unless Bob happened to have also trained the system with his voice).

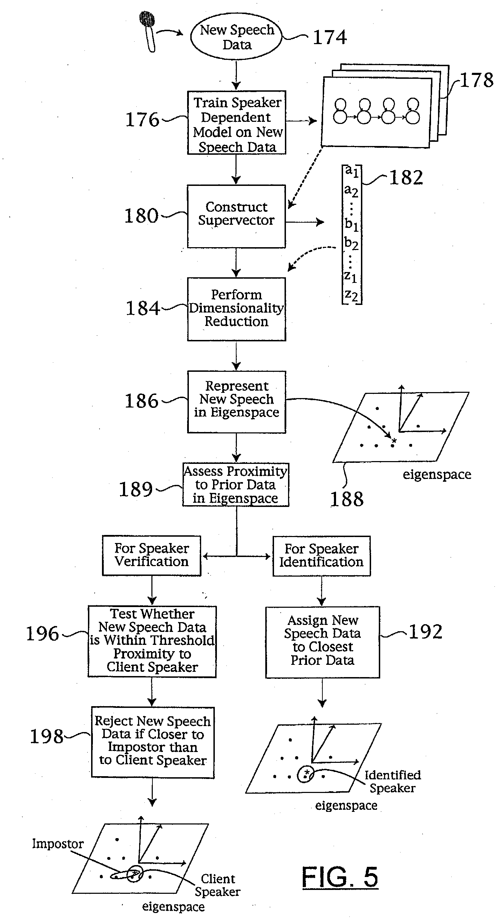

Where text independent (Tl) speech processing is employed, other techniques may be used to generate a confidence level. In a presently preferred embodiment, the present invention employs the model-based analytical approach for speaker verification and/or speaker identification that is disclosed in "Speaker Verification and Speaker Identification Based on Eigenvoices", U.S. Patent Serial No. 09/148,911, filed September 4, 1998, which assigned to the assignee of the present invention and is hereby incorporated by reference. The Eigenvoice technique works well in this application because it is able to perform speaker verification/identification after receiving only a very short utterance from the speaker. In particular, the Eigenvoice technique may be used in both speaker identification and speaker verification modes. Speaker identification is employed when the identity of the speaker is not known. Speaker verification is employed when the identity of the speaker is known. The speaker's identity may be known because the speaker states, "This is John Smith, please let me in." Alternately, the face recognition module may be used. Alternately, the door access system may be used to confirm the identity of the person using a password, PIN, key or other device. Both of these modes have been illustrated in FIG 5.

Models 178 are constructed and trained (as at 176) upon the speech 174 of known client speakers (and possibly in the case of speaker verification also upon the speech of one or more impostors). These speaker models typically employ a multiplicity of parameters (such as Hidden Markov Model parameters). Rather than using these parameters directly, the parameters are concatenated at 180 to form supervectors 182. These supervectors, one supervector per speaker, represent the entire training data speaker population.

A linear transformation is performed as at 184 on the supervectors resulting in a dimensionality reduction that yields a low-dimensional space called eigenspace 188. The basis vectors of this eigenspace are called "eigenvoice" vectors or "eigenvectors". If desired, the eigenspace can be further dimensionally reduced by discarding some of the eigenvector terms.

Next, each of the speakers is represented in eigenspace, either as a point in eigenspace or as a probability distribution in eigenspace. The former is somewhat less precise in that it treats the speech from each speaker as relatively unchanging. The latter reflects that the speech of each speaker will vary from utterance to utterance. Having represented the training data for each speaker in eigenspace, the system may then be used to perform speaker verification or speaker identification.

New speech data is obtained and used to construct a supervector that is then dimensionally reduced and represented in the eigenspace. Assessing the proximity of the new speech data to prior data in eigenspace, speaker verification or speaker identification is performed at 189. In FIG 5 both speaker verification and speaker identification processes are illustrated in the same figure, as left and right branches descending from step 189.

The proximity between the new speech data and the previously stored data (as reflected in the eigenspace 188) is used to generate the confidence levels that are described above. The new speech from the speaker is tested at 196 to determine if the speech corresponds to the client speaker or an impostor. The speech is verified if its corresponding point or distribution within eigenspace is within the confidence level or proximity to the training data for the client speaker. The system may reject the new speech at 198 if it falls outside of the predetermined proximity or confidence level or is closer to an impostor's speech when placed in eigenspace.

Speaker identification is performed in a similar fashion. The new speech data is placed in eigenspace and identified with that training speaker whose eigenvector point for distribution is closest as at 192.

Assessing proximity between the new speech data and the training data in eigenspace and generating confidence levels has a number of advantages. First, the eigenspace represents in a concise, low-dimensional way, each entire speaker, not merely a selected few features of each speaker. Proximity computations (e.g. comparing the confidence level with a threshold) performed in eigenspace can be made quite rapidly as there are typically considerably fewer dimensions to contend with in eigenspace than there are in the original speaker model space or feature vector space. Also, the system does not require that the new speech data include each and every example or utterance that was used to construct the original training data. Through techniques described herein, it is possible to perform dimensionality reduction on a supervector for which some of its components are missing. The result point for distribution in eigenspace nevertheless will represent the speaker remarkably well.

The eigenvoice techniques employed by the present invention will work with many different speech models. The preferred embodiment is illustrated in connection with a Hidden Markov Model recognizer because of its popularity in speech recognition technology today. However, it should be understood that the invention can be practiced using other types of model-based recognizers, such as phoneme similarity recognizers, for example.

Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, the specification and the following claims.

## Claims

1. An apparatus for interacting with a secure resource accessible through a telephone system of the type that provides telephone access through a plurality of extensions, comprising:
a security server having an interface for sending messages to said telephone system, said messages being adapted to provide control signals to said secure resource;
a biometric data store that stores biometric data associated with at least one user;
a biometric data input system coupled to said security server and operable to obtain user biometric data from said user;
said biometric verification/identification system being configured to access said data store and to evaluate said user biometric data vis-à-vis said stored biometric data and to provide instructions to said security server and thereby provide control signals for interacting with said secure resource.

2. The apparatus of claim 1 wherein said interface is a telephony interface coupled to said telephone system.

3. The apparatus of claim 1 wherein said interface is an interface coupling said security server with an intermediate system that in turn communicates with said telephone system.

4. The apparatus of claim 1 wherein said interface is a network interface for communicating messages over a network between said security server and said telephone system.

5. The apparatus of claim 1 wherein said data store is configured to store biometric data in association with at least one of said plurality of extensions.

6. The apparatus of claim 1 wherein said biometric data input system is operable to obtain user biometric data from a user operating one of said plurality of extensions.

7. The apparatus of claim 1 wherein said security system is configurable through training to operate upon biometric data from said user.

8. The apparatus of claim 1 wherein said security system is configurable through training to operate upon biometric data from said user using training speech provided using said telephone system.

9. The apparatus of claim 1 wherein said security system includes direct interface for coupling to said secure resource.

10. The apparatus of claim 9 wherein said direct interface is a wired connection to said secure resource.

11. The apparatus of claim 9 wherein said direct interface is a network connection communicating with said secure resource.

12. The apparatus of claim 9 wherein said direct interface is a wireless connection communicating with said secure resource.

13. The apparatus of claim 1 wherein said biometric data input system is a voice input system.

14. The apparatus of claim 1 wherein said biometric data input system is a voice input system communicating with said telephone system through at least one of said extensions.

15. The apparatus of claim 1 wherein said biometric verification/identification system employs a speaker verification/identification system.

16. The apparatus of claim 1 wherein said biometric verification/identification system automatically determines an extension identifier associated with said one of said plurality of extensions being operated by said user, and uses said extension identifier in accessing said stored biometric data.

17. The apparatus of claim 1 wherein said biometric verification/identification system employs a speech recognition system that compares the user's speech with a predefined list of keywords.

18. The apparatus of claim 1 wherein said biometric verification/identification system employs a speech recognition system that employs a wordspotting system for identifying keywords within a speech utterance.

19. The apparatus of claim 1 wherein said biometric verification/identification system employs a speaker verification/identification system that assesses at least one a text independent component and at least one text dependent component.

20. The apparatus of claim 1 wherein said security server couples to said telephone system as one of said plurality of extensions

21. A method of interacting with a secure resource accessible through a telephone system of the type that provides telephone access through a plurality of extensions comprising the steps of:
receiving user biometric data from a user operating one of said extensions;
obtaining user extension information that identifies which one of said extensions the user is operating;
using said user extension information and said user biometric data to access a data store containing stored biometric data associated with stored extension information;
evaluating said user biometric data vis-à-vis said stored biometric data and providing instructions to interact with said secure resource based on the results of said evaluating step.

22. The method of claim 21 wherein said biometric data is speech data.

23. The method of claim 21 wherein said biometric data is speech data provided through said one of said extensions.

24. The method of claim 21 wherein said biometric data is speech data and said evaluating step is performed using a speaker verification/identification technique applied to said speech data.

25. The method of claim 21 wherein said biometric data is speech data and said evaluating step is performed using a speaker recognition to compare said speech data with a predefined set of keywords.

26. The method of claim 21 wherein said biometric data is stream of continuous speech data and said evaluating step is performed by wordspotting to identify keywords within said continuous speech data.

27. , The method of claim 21 wherein said biometric data is stream of continuous speech data and said evaluating step is performed by assessing at least one text independent component and at least one text dependent component.

28. A method of interacting with a secure resource accessible through a telephone system of the type that provides telephone access through a plurality of extensions comprising the steps of:
receiving user biometric data from a user;
using said user biometric data to access a data store containing stored biometric data associated with said user;
evaluating said user biometric data vis-à-vis said stored biometric data and providing instructions to interact with said secure resource based on the results of said evaluating step.

29. The method of claim 28 further comprising storing biometric data associated with a plurality of users.
